# EUROPÄISCHE PATENTSCHRIFT

(11) **EP 1 631 151 B1**
(45) Veröffentlichungstag und Bekanntmachung des Hinweises auf die Patenterteilung: **27.09.2006**
(21) Anmeldenummer: 04740622.8
(22) Anmeldetag: 03.07.2004
(51) Int. Cl.: A23F 5/14

(54) **PULVERFÖRMIGE ZUSAMMENSETZUNG MIT RÖSTKAFFEE**
PULVERULENT COMPOSITION CONTAINING ROAST COFFEE
COMPOSITION EN POUDRE CONTENANT DU CAFE TORREFIE

(30) Priorität: 15.06.2004 DE 102004028649; 22.06.2004 DE 102004030200
(43) Veröffentlichungstag der Anmeldung: 08.03.2006
(73) Patentinhaber: Krüger GmbH & Co. KG, 51469 Bergisch-Gladbach (DE)
(72) Erfinder: MEYER, Franz-Josef, 53757 St. Augustin (DE); MÜLLER, Manfred, 66793 Saarwellingen (DE); KÜHN, Halina, 42929 Wermelskirchen (DE)
(74) Vertreter: Gesthuysen, von Rohr & Eggert
(86) Internationale Anmeldenummer: PCT/EP2004/007281
(87) Internationale Veröffentlichungsnummer: WO 2005/122780

(56) Entgegenhaltungen:
- EP-A- 0 220 889
- EP-A- 0 674 839
- WO-A1-99/39587
- DE-A1- 2 846 515
- DE-A1- 19 540 014
- DE-C1- 4 103 209

## Beschreibung

Die vorliegende Erfindung betrifft eine pulverförmige Zusammensetzung, welche in einer Matrix befindliches Röstkaffeepulver in fein vermahlener Form enthält, und ein Verfahren zu ihrer Herstellung sowie ihre Verwendung in kaffee- und/oder kakaohaltigen Instantgetränken, insbesondere Cappuccino-Getränken. Des weiteren betrifft die vorliegende Erfindung kaffee- und/oder kakaohaltige Instantgetränke, insbesondere Cappuccino-Getränke, welche die vorgenannte pulverförmige Zusammensetzung enthalten.

Der Begriff Instantprodukte ist eine Bezeichnung für meist pulverförmige, in Wasser lösliche bzw. dispergierbare Produkte überwiegend auf dem Gebiet der Nahrungs- und Heilmittel, wie Kaffee-, Tee-, Kakao-, Milchprodukte etc. Die Herstellung von Instantprodukten erfolgt im allgemeinen durch Extraktion der Nahrungs- und Heilmittel bzw. deren Inhaltsstoffe, gefolgt von einer anschließenden Trocknung, insbesondere Gefrier- oder Sprühtrocknung. Für weitere Einzelheiten kann verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist.

Auf diese Weise wird auch Instantkaffee, synonym auch als Löskaffee bezeichnet, hergestellt. Diesbezüglich kann auch auf Römpp Chemielexikon, Band 3, Georg-Thieme-Verlag, Stuttgart/New York 1997, Seiten 2042 bis 2044, Stichwort: "Kaffee", sowie die dort referierte Literatur verwiesen werden, deren gesamter Offenbarungsinhalt hiermit durch Bezugnahme eingeschlossen ist.

Um die organoleptischen Eigenschaften, insbesondere das Aroma und den Geschmack, von frischem Röstkaffee zu bewahren, sind zahlreiche Verfahren vorgeschlagen worden, um die Herstellung von Instantkaffee zu verbessern, insbesondere was dessen organoleptischen Eigenschaften anbelangt; rein beispielhaft kann in diesem Zusammenhang verwiesen werden auf die DE 2 846 515 A1, die EP 0 826 308 A1, die DE 696 24 222 T2 (EP 0 809 443 B1), die DE 38 82 355 T2 (EP 0 326 740 B1), die DE 690 06 852 T2 (EP 0 482 236 B1) und die DE 690 30 199 T2 (EP 0 574 034 B1).

Ein entscheidender Nachteil von Instantkaffee liegt aber darin, daß trotz verbesserter Verfahren zu seiner Herstellung die organoleptischen Eigenschaften, insbesondere die Geschmacks- und Aromenzusammensetzungen, nicht denen von frischem Röstkaffee entsprechen. Dieselben Nachteile gelten folglich auch für solche Instantgetränke, insbesondere kaffee- und/oder kakaohaltige Instantgetränke, wie Cappuccino-Instantgetränke, welche Instantkaffee enthalten.

Deshalb wird im Stand der Technik teilweise versucht, dem Instantkaffee dadurch verbesserte Geschmacks- und Aromaeigenschaften zu verleihen, indem dem Instantkaffee nachträglich die entsprechenden Geschmacks- und Aromastoffe zugesetzt werden. Dies ist jedoch nicht nur verfahrensaufwendig, sondern in vielen Fällen auch unerwünscht, da ein verfälschter oder "unechter" Geschmack entsteht. Zum Teil verbieten auch die lebensmittelrechtlichen Vorschriften den Zusatz von Aroma- und Geschmacksstoffen zu den Instantprodukten.

Andererseits läßt sich solchen Instantprodukten zur Geschmacksverbesserung auch nicht ohne weiteres fein gemahlener Röstkaffee zusetzen, weil dieser sich bei Aufbereitung des entsprechenden Instantgetränks rasch absetzt und zum anderen ein unangenehmes Mundgefühl und folglich einen unangenehmen Beigeschmack verursacht.

Eine Aufgabe der vorliegenden Erfindung besteht darin, die organoleptischen Eigenschaften, insbesondere die Geschmacks- und Aromaeigenschaften, von kaffee- und kakaohaltigen Instantgetränken zu verbessern. Insbesondere liegt eine Aufgabe der vorliegenden Erfindung darin, kaffee- und/oder kakaohaltige Instantgetränke in ihren geschmacklichen und Aromaeigenschaften dahingehend zu verbessern, daß eine typische, charakteristische Kaffeenote, insbesondere Röstkaffeenote, vorhanden ist.

Die Anmelderin hat überraschenderweise herausgefunden, daß das zuvor geschilderte Problem dadurch gelöst werden kann, indem den Instantgetränken Röstkaffee in fein vermahlener bzw. zerkleinerter Form zugesetzt wird, wenn das Röstkaffeepulver durch Einlagerung in eine Matrix stabilisiert wird.

Gegenstand der vorliegenden Erfindung ist somit eine pulverförmige Zusammensetzung, welche Röstkaffeepulver in fein vermahlener bzw. fein zerkleinerter Form enthält, wobei das Röstkaffeepulver in eine Matrix eingelagert oder eingebettet ist oder hiervon umgeben ist.

Die Einlagerung bzw. Einbettung des Röstkaffeepulvers in die Matrix bietet eine Reihe von Vorteilen:

Zum einen wird der fein zerkleinerte bzw. fein vermahlene Röstkaffee durch Einschluß in die Matrix wirksam gegen Oxidation geschützt. Die organoleptischen Eigenschaften, insbesondere die Geschmacks- und Aromastoffe, des Röstkaffeepulvers bleiben auf diese Weise erhalten und werden wirksam geschützt.

Bei Inkorporierung der erfindungsgemäßen pulverförmigen Zusammensetzung in kaffee- und/oder kakaohaltige Instantgetränke, insbesondere Cappuccino-Getränke, werden diesen Instantgetränken die vorteilhaften Eigenschaften von frischem Röstkaffee verliehen, und zwar sowohl in geschmacklicher Hinsicht wie auch im Hinblick auf andere sensorische Merkmale (z. B. Geruch etc.). Dies führt zu einer Geschmacksoptimierung der kaffee- und/oder kakaohaltigen Instantgetränke, insbesondere Cappuccino-Getränke, da durch den Zusatz des in die Matrix eingelagerten Röstkaffeepulvers eine Duft- und Geschmacknote nach frischem Röstkaffee erreicht wird. Die Matrix ist derart beschaffen, daß die Geschmacks- und Aromastoffe das Röstkaffees bei Zubereitung der Instantgetränke freigesetzt werden können (z. B. durch Diffusions- und/oder Solubilisierungsprozesse und dergleichen).

Zum anderen kann die erfindungsgemäße pulverförmige Zusammensetzung bzw. das in der Matrix befindliche Röstkaffeepulver bei Zubereitung des entsprechenden Instantgetränks mit Wasser ohne weiteres in dem Zubereitungswasser dispergiert werden, d. h. im Gegensatz zu reinem Röstkaffeepulver setzt sich das in der Matrix befindliche Röstkaffeepulver nicht ab und erzeugt kein unangenehmes Mundgefühl beim Verzehr. Vielmehr ist der haptische Eindruck beim Verzehr von Instantgetränken, welche die erfindungsgemäße pulverförmige Zusammensetzung enthalten, gleichzusetzen mit kaffee- bzw. kakaohaltigen Getränkepulvern im aufgelösten Zustand.

Was die Matrix anbelangt, in die das Röstkaffeepulver eingelagert ist, so können hier eine Vielzahl von Substanzen zum Einsatz kommen, sofern sie das Röstkaffee lagerstabil einlagern bzw. umgeben und lebensmitteltechnisch geeignet sind und im Hinblick auf die gewünschten sensorischen Eigenschaften kompatibel sind.

Im allgemeinen umfaßt die Matrix, in die das Röstkaffeepulver eingelagert bzw. eingebettet ist bzw. von der das Röstkaffeepulver umgeben ist, solche Bestandteile bzw. Komponenten, die ausgewählt sind aus der Gruppe von (i) Zuckern (z. B. Saccharose, Mannose, Maltose, Dextrose, Glucose etc.), Zukkeralkoholen (z. B. Mannit, Sorbit, Xylit, Galactit etc.) und Zuckerersatzstoffen (z. B. Zuckeraustauschstoffe, Süßstoffe, Süßungsmitttel etc.); (ii) Fetten, Fettderivaten und anderen fettbasierten Systemen; (iii) Hydrokolloiden, Hydrokolloidderivaten und anderen hydrokolloidbasierten Systemen (z. B. Xanthane, Dextrane, Gummi arabicum, Celluloseether etc.); (iv) Kakao, insbesondere in Form von Kakaomasse und/oder Kakaopulver; die vorgenannten matrixbildenden Materialien können entweder einzeln oder in Mischung eingesetzt werden.

Gemäß einer besonderen Ausführungsform umfaßt die Matrix, in die das Röstkaffeepulver eingelagert bzw. eingebettet ist bzw. von der das Röstkaffeepulver umgeben ist, Kakaomasse und/oder Zucker, vorzugsweise Kakaomasse und Zucker. Gemäß einer bevorzugten Ausführungsform umfaßt die Matrix, in die das Röstkaffeepulver eingelagert bzw. eingebettet ist bzw. von der das Röstkaffeepulver umgeben ist, die Komponenten Kakaomasse, Zukker, Kakaopulver und gegebenenfalls Aromen bzw. Aromastoffe, insbesondere Vanillin. Eine solche Matrix führt zu einer erfindungsgemäßen pulverförmigen Zusammensetzung mit besonders guten organoleptischen Eigenschaften und guter Matrixstabilität. Erfindungsgemäß bevorzugter Zucker ist Saccharose bzw. deren Derivate. Wenn der Begriff "Zucker" im Rahmen der vorliegenden Erfindung im folgenden ohne weiteren Zusatz und im Singular verwendet wird, bezeichnet er im allgemeinen daher Saccharose oder ihre Derivate, also handelsüblichen Zucker, wie er auch umgangssprachlich verstanden wird (siehe hierzu auch Römpp Chemielexikon, Band 6, 10. Auflage, Georg-Thieme-Verlag, Stuttgart/New York, 1999, Seiten 5096 bis 5097, Stichwort: "Zucker").

Was die erfindungsgemäß für die Matrix verwendete Kakaomasse anbelangt, so kommt hier handelsübliche Kakaomasse oder üblicherweise hergestellte Kakaomasse zum Einsatz. Für weitere Einzelheiten in bezug auf die Kakaomasseherstellung kann beispielsweise verwiesen werden auf H.-A. Kurzhals (Hrsg.), Lexikon Lebensmitteltechnik, Band A-K, 1. Auflage, 2003, B. Behr's Verlag GmbH & Co. KG, Hamburg, Seiten 572/573, Stichwort: "Kakaomasseherstellung".

Gemäß einer besonders bevorzugten Ausführungsform kann als Kakaomasse für die Matrix eine veredelte bzw. nachveredelte Kakaomasse zum Einsatz kommen. Hierdurch werden besonders vorteilhafte Geruchs- und Geschmackseigenschaften erreicht. Gemäß einer ganz besonderes bevorzugten Ausführungsform wird eine mit einem Dünnschichtverfahren nachveredelte Kakaomasse für die Matrix eingesetzt. Dies führt zu besonders guten organoleptischen Eigenschaften.

Die Veredelung bzw. Nachveredelung von Kakaomasse ist dem Fachmann als solche bekannt. Diesbezüglich kann beispielsweise verwiesen werden auf das vorgenannte Lexikon Lebensmitteltechnik (loc. cit.), Seite 573, Stichwort: "Kakaomasseveredelung". Ein erfindungsgemäß bevorzugtes Veredelungsverfahren ist das PETZOMAT-Dünnschichtverfahren, das in einer Anlage aus mehreren Sprühsäulen betrieben wird. Hierbei wird die zu veredelnde Kakaomasse entweder mit Wasser oder einer speziellen Impflösung in einem statischen Mischer homogen angefeuchtet. Die Beschickung der Anlage erfolgt mit einer regelbaren Pumpe. Die von oben nach unten fließende Masse wird mit der von unten nach oben steigenden Heißluft im gebildeten Ringraum zwischen dem Stator und Rotor in einer turbulenten Strömung sehr intensiv bearbeitet. Die als feinste Tröpfchen vorliegende Kakaomasse gibt ihre Feuchtigkeit mit den unerwünschten Komponenten, wie Essigsäure, Carbonylverbindungen, Aminen etc., an die sie umspülende Luft ab. Anschließend wird die Kakaomasse gekühlt und bis zur Weiterverarbeitung in einem Tank gelagert.

Was die Zuckerkomponente der erfindungsgemäß vorgesehenen Matrix anbelangt, so kommt insbesondere Saccharose bzw. Rohrzucker in Betracht. Grundsätzlich können aber auch andere Zucker zum Einsatz kommen, wie sie zuvor teilweise auch schon genannt worden sind (z. B. Mannose, Maltose, Dextrose, Glucose etc.). Erfindungsgemäß bevorzugt ist aber Saccharose.

Was die Matrix aus Kakaomasse und/oder Zucker, vorzugsweise Kakaomasse und Zucker, anbelangt, so können der Kakaomasse- und der Zuckeranteil jeweils in weiten Bereichen variieren. Im allgemeinen enthält die Matrix, jeweils bezogen auf die pulverförmige Zusammensetzung, 35 bis 90 Gew.-%, insbesondere 35 bis 70 Gew.-%, vorzugsweise 40 bis 60 Gew.-%, Kakaomasse und/oder 10 bis 50 Gew.-%, insbesondere 15 bis 45 Gew.-%, vorzugsweise 20 bis 45 Gew.-%, Zucker, insbesondere Rohrzucker.

Was den eingelagerten Röstkaffeepulveranteil anbelangt, so kann dieser gleichermaßen in weiten Bereichen variieren. Im allgemeinen enthält die erfindungsgemäße pulverförmige Zusammensetzung 1 bis 45 Gew.-%, insbesondere 5 bis 25 Gew.-%, vorzugsweise 10 bis 20 Gew.-%, ganz besonderes bevorzugt etwa 15 Gew.-%, Röstkaffeepulver, bezogen auf die pulverförmige Zusammensetzung. Der verbleibende Anteil wird also durch die Matrix gebildet, welche folglich 99 bis 55 Gew.-%, insbesondere 95 bis 75 Gew.-%, vorzugsweise 90 bis 80 Gew.-%, ganz besonderes bevorzugt etwa 85 Gew.-%, bezogen auf die pulverförmige Zusammensetzung, ausmacht.

Weiterhin ist es möglich, daß die erfindungsgemäße Zusammensetzung bzw. die Matrix, in welche das Röstkaffeepulver eingelagert ist, außerdem weitere Inhaltsstoffe enthält. Diese können insbesondere ausgewählt sein aus der Gruppe von Aromen und Aromazusätzen, wie Vanillin; Kakaopulver; Lecithinen; Verarbeitungshilfsmitteln; und dergleichen. Beispielsweise dienen Aromen und Aromazusätze, insbesondere Vanillin, einer Verfeinerung der Geruchs- und Geschmacksnote der erfindungsgemäßen pulverförmigen Zusammensetzung. Dasselbe gilt für den Zusatz von Kakaopulver. Lecithine reduzieren beispielsweise die Oberflächenspannung des Fettes der Kakaomasse und erleichtern somit sowohl den Herstellungsprozeß als auch die Verwendung der erfindungsgemäßen pulverförmigen Zusammensetzung in den gewünschten Instantgetränkezusammensetzungen.

Wenn die Matrix, in welche das Röstkaffeepulver eingelagert ist, neben den Hauptbestandteilen Kakaomasse und/oder Zucker außerdem Aromen und/oder Aromazusätze, insbesondere Vanillin, enthält, so können deren Mengen in weiten Bereichen variieren; im allgemeinen werden Aromen und/oder Aromazusätze in Mengen von 0,01 bis 5 Gew.-%, insbesondere 0,01 bis 2 Gew.-%, vorzugsweise 0,01 bis 1 Gew.-%, bezogen auf die erfindungsgemäße pulverförmige Zusammensetzung, zugesetzt.

Wenn die Matrix, in die das Röstkaffeepulver eingelagert ist, außerdem Kakaopulver enthält, so kann dessen Anteil in weiten Bereichen variieren; im allgemeinen verwendet man das Kakaopulver in Mengen von 0,5 bis 10 Gew.-%, vorzugsweise 1 bis 5 Gew.-%, bezogen auf die erfindungsgemäße pulverförmige Zusammensetzung.

Eine erfindungsgemäß besonders bevorzugte pulverförmige Zusammensetzung nach der vorliegenden Erfindung hat beispielsweise die folgende Komposition bzw. Rezeptur:

| | |
|---|---|
| Kakaomasse | 43,70 Gew.-Teile |
| Zucker | 38,26 Gew.-Teile |
| Röstkaffeepulver (gemahlen) | 15,00 Gew.-Teile |
| Kakaopulver | 3,00 Gew.-Teile |
| Vanillin | 0,04 Gew.-Teile |

wobei alle vorgenannten Gewichtsteilangaben jeweils mit ± 10 % (relativ) variiert werden können.

Für eine gute Verwendbarkeit in Instantgetränken und eine gute Handhabbarkeit weist die erfindungsgemäße pulverförmige Zusammensetzung eine Komgröße der einzelnen Teilchen der pulverförmigen Zusammensetzung (d. h. Teilchen, welche aus der Matrix mit dem hierin eingelagerten Röstkaffeepulver bestehen) eine mittlere Teilchengröße von 1 bis 100 µm, vorzugsweise 10 bis 35 µm, bevorzugt etwa 30 µm, auf. Insbesondere weisen mindestens 90 % der Teilchen der pulverförmigen Zusammensetzung die vorgenannten Teilchengrößen auf.

Für eine gute Handhabbarkeit, insbesondere eine gute Verwendbarkeit, in den vorgenannten Instantgetränken liegt die erfindungsgemäße pulverförmige Zusammensetzung als ein fließ- bzw. rieselfähiges Pulver vor. Im allgemeinen weist die erfindungsgemäße pulverförmige Zusammensetzung eine Schüttdichte von 200 bis 700 g/l, insbesondere 400 bis 600 g/l, vorzugsweise 500 bis 575 g/l, auf.

Ein weiterer Gegenstand der vorliegenden Erfindung ist ein Verfahren zur Herstellung der erfindungsgemäßen pulverförmigen Zusammensetzung. Nach dem erfindungsgemäßen Verfahren erfolgt die Herstellung der pulverförmigen Zusammensetzung nach der vorliegenden Erfindung im allgemeinen derart, daß die einzelnen Bestandteile der pulverförmigen Zusammensetzung, wie zuvor definiert, zunächst homogenisiert werden (z. B. durch Mischen im trokkenen Zustand) und daß anschließend die homogenisierten Bestandteile auf die gewünschte Teilchengröße eingestellt werden (z. B. durch Zerkleinern), wobei hierdurch gleichermaßen eine Einlagerung bzw. Einbettung des Röstkaffeepulvers in die Matrix aus Kakaomasse und/oder Zucker sowie gegebenenfalls weiteren Bestandteilen, wie zuvor definiert, erfolgt. Dem Verfahrensschritt der Teilchengrößeneinstellung, insbesondere durch Zerkleinern, kann sich gegebenenfalls ein weiterer Verfahrensschritt anschließen, bei dem die in die gewünschte Teilchengröße gebrachte, insbesondere zerkleinerte pulverförmige Zusammensetzung in ein fließ- bzw. rieselförmiges Pulver umgewandelt wird (z. B. in einem sogenannten Pflugscharmischer).

Gemäß einer besonderen Ausführungsform wird der Verfahrensschritt des Einstellens der Teilchengröße, insbesondere des Zerkleinerns, in mehreren, vorzugsweise mindestens zwei Verfahrensschritten durchgeführt. Insbesondere erfolgt das Einstellen der Teilchengrößen, insbesondere Zerkleinern, durch Walzen und/oder Feinwalzen der homogenisierten Mischung der einzelnen Bestandteile, insbesondere in einem Walzwerk. Hierdurch wird gleichzeitig eine Einlagerung des Röstkaffeepulvers in die Matrix aus Kakaomasse, Zukker und/oder gegebenenfalls weiteren Bestandteilen, wie zuvor definiert, erreicht.

Gemäß einer besonderen Ausführungsform der vorliegenden Erfindung erfolgt das Einstellen der Teilchengröße, insbesondere Zerkleinern, in zwei aufeinander folgenden Verfahrensschritte. Dabei kann beispielsweise in dem ersten Zerkleinerungsschritt die Mischung der einzelnen Bestandteile in einem Zwei-Walzwerk vorgewalzt werden und nachfolgend in einem Fünf-Walzwerk auf die gewünschte Teilchenendgröße eingestellt werden. Im abschließenden Verfahrensschritt wird dann die auf die Teilchenendgröße eingestellte Mischung in ein fließ- bzw. rieselfähiges Pulver verwandelt, insbesondere mittels eines kühlbaren Pflugscharmischers oder anderer geeigneter Mischertypen.

Gemäß einer erfindungsgemäß besonders bevorzugten Ausführungsform wird das erfindungsgemäße Verfahren zur Herstellung der pulverförmigen Zusammensetzung nach der vorliegenden Erfindung wie folgt durchgeführt:
1. Mischen der Einzelzutaten in einem geeigneten Mischer
2. Walzen der Mischung
   (z.B. in einem Zwei-Walzwerk mit einem Durchlauf)
   (Angestrebte Feinheit: z. B. ca. 150 µm)
3. Feinwalzen der Mischung
   (z. B. in einem Fünf-Walzwerk mit einem Durchlauf)
   (Angestrebte Feinheit: z. B. ca. 28 µm)
   Ergebnis: trockene, kompakte Masse
4. Endfertigung mittels eines kühlbaren Pflugscharmischers, um die aus Schritt 3.) stammende, trockene und kompakte Masse zu einem fließ- bzw. rieselfähigen Pulver umzusetzen.

Wie zuvor erläutert, kann die zuvor beschriebene, erfindungsgemäße pulverförmige Zusammensetzung in kaffee- und/oder kakaohaltigen Instantgetränken, insbesondere Cappuccino-Getränken, zum Einsatz kommen.

Weiterer Gegenstand der vorliegenden Erfindung ist somit die Verwendung der erfindungsgemäßen pulverförmigen Zusammensetzung, wie zuvor beschrieben, in kaffee- bzw. kakaohaltigen Instantgetränken, insbesondere Cappuccino-Getränken.

Die Verwendung der erfindungsgemäßen pulverförmigen Zusammensetzung in kaffee- bzw. kakaohaltigen Instantgetränken erfolgt im allgemeinen zusammen mit weiteren, in diesem Zusammenhang dem Fachmann an sich bekannten Bestandteilen. Diese weiteren Bestandteile sind insbesondere ausgewählt aus der Gruppe von Creamer (d. h. Kaffeeweißer, wie aufgeschäumte Milchpulver etc.), Zuckern, Zuckerersatzstoffen, Süßstoffen, Instantkaffee (Löskaffee), Salz, Aromen und Aromastoffen und dergleichen.

Weiterer Gegenstand der vorliegenden Erfindung sind kaffee- und/oder kakaohaltige Instantgetränke, insbesondere Gappuccino-Getränke, welche die zuvor beschriebene pulverförmige Zusammensetzung nach der vorliegenden Erfindung enthalten. Die erfindungsgemäßen kaffee- und/oder kakaohaltigen Instantgetränke enthalten die pulverförmige Zusammensetzung im allgemeinen in Mengen von 5 bis 60 Gew.-%, insbesondere 10 bis 50 Gew.-%, vorzugsweise 30 bis 45 Gew.-%, besonders bevorzugt etwa 40 Gew.-%, bezogen auf das Instantgetränk.

Wie zuvor erwähnt, können solche Instantgetränke außerdem weitere Bestandteile oder Inhaltsstoffe enthalten. Beispiele hierfür sind Creamer, Zucker, Zuckerersatzstoffe, Süßstoffe, Instantkaffee (Löskaffee), Salz, Aromen und Aromastoffe und dergleichen.

Ein erfindungsgemäß besonders bevorzugtes Instantgetränk ("Cappuccino-Getränk") nach der vorliegenden Erfindung hat beispielsweise die folgende Komposition bzw. Rezeptur:

| | |
|---|---|
| pulverförmige Zusammensetzung nach der Erfindung | 40,00 Gew.-Teile |
| Creamer | 35,40 Gew.-Teile |
| Zucker | 12,50 Gew.-Teile |
| Instantkaffee (Löskaffee) | 12,00 Gew.-Teile |
| Salz | 0,10 Gew.-Teile |

wobei alle vorgenannten Gewichtsteilangaben jeweils mit ± 10 % (relativ) variiert werden können.

### Mit der vorliegenden Erfindung sind eine Reihe von Vorteilen verbunden:

Die erfindungsgemäße pulverförmige Zusammensetzung enthält Röstkaffee in fein vermahlener bzw. fein verteilter Form, eingeschlossen in bzw. umgeben von einer Matrix aus Kakaomasse und/oder Zucker und gegebenenfalls weiteren Inhaltsstoffen bzw. Bestandteilen, wie zuvor beschrieben, weshalb im Rahmen der vorliegenden Erfindung diese Matrix auch als "Schokoladen(pulver)matrix" bezeichnet wird. Auf diese Weise wird fein zerkleinerter bzw. vermahlener Röstkaffee in die Schokoladenpulvermatrix eingeschlossen und somit wirksam gegen Oxidation geschützt. Folglich eignet sich die resultierende pulverförmige Zusammensetzung nach der vorliegenden Erfindung, welche das in der Schokoladenmatrix eingebettete, fein vermahlene Röstkaffeepulver enthält, insbesondere zur Verwendung in Instantgetränken, vorzugsweise kaffee- und/oder kakaohaltigen Instantgetränken (speziell Cappuccino-Getränken). Bei Aufbereitung dieser Instantgetränke mit Wasser wird die pulverförmige Zusammensetzung nach der vorliegenden Erfindung rasch dispergiert und kann somit als Geschmacksoptimierung des Kaffee- bzw. Kakaogeschmacks fungieren.

Zudem wird durch die besondere Matrix aus "Schokoladenpulver" und feinst vermahlenem Röstkaffee ausgeschlossen, daß sich der ansonsten unlösliche gemahlene Röstkaffee als Absatz im Mund- und Rachenbereich bemerkbar macht. Der haptische Eindruck beim Verzehr der zuvor beschriebenen Instantgetränke, welche neben der pulverförmigen Zusammensetzung nach der vorliegenden Erfindung auch noch weitere Bestandteile enthalten, wie z. B. Zucker, Creamer, Instantkaffee (Löskaffee) etc., wie zuvor beschrieben, ist gleichzusetzen mit kakaohaltigen Getränkepulvern im aufgelösten Zustand.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt. Die vorliegende Erfindung wird anhand des folgenden Ausführungsbeispiels veranschaulicht, welches die vorliegende Erfindung jedoch nicht beschränkt.

### Ausführungsbeispiel:

In einer Mischvorrichtung werden 43,70 Gew.-Teile Kakaomasse, 38,26 Gew.-Teile Zucker, 15,00 Gew.-Teile fein gemahlenes Röstkaffeepulver, 3,00 Gew.-Teile Kakaopulver und 0,04 Gew.-Teile Vanillin innig miteinander vermischt und auf diese Weise homogenisiert.

Anschließend wird die homogenisierte Mischung einem ersten Walzdurchgang unterworfen. Zu diesem Zweck wird die homogenisierte Mischung in einem Zwei-Walzwerk in einem Durchlauf auf eine mittlere Teilchengröße von etwa 150 µm gebracht.

Anschließend wird die vorgewalzte Mischung einer Feinwalzung unterzogen. Zu diesem Zweck wird das Ganze mit einem Durchlauf in einem Fünf-Walzwerk gewalzt, so daß eine trockene und kompakte Masse mit einer Feinheit von etwa 28 µm mittlere Teilchengröße resultiert.

Schließlich wird in einem kühlbaren Pflugscharmischer die zuvor erhaltene, trockene, kompakte Masse in ein fließ- bzw. rieselfähiges Pulver umgewandelt.

Es resultiert eine erfindungsgemäße pulverförmige Zusammensetzung, welche 15,00 Gew.-Teile Röstkaffeepulver, eingebettet in eine Matrix aus Kakaomasse, Zucker, Kakaopulver und Vanillin, enthält.

Die physikalische Analyse der pulverförmigen Zusammensetzung zeigt eine Feinheit von 93 bis 95 % der Teilchen < 30 µm auf (Durchschnittswert, Naßversiebung). Die Schüttdichte der pulverförmigen Zusammensetzung liegt bei etwa 565 g/l.

In bezug auf die Sensorik zeigt die erfindungsgemäße pulverförmige Zusammensetzung einen Geruch mit starker Röstkaffeenote und einen kakaobetonten Geschmack.

Die resultierende erfindungsgemäße pulverförmige Zusammensetzung wird anschließend in ein kaffeehaltiges Instantgetränk ("Cappuccino-Instantgetränk") inkorporiert, welches die folgende Zusammensetzung aufweist:

| | |
|---|---|
| Pulverförmige Zusammensetzung nach der vorliegenden Erfindung (wie zuvor beschrieben hergestellt) | 40,00 Gew.-Teile |
| Creamer | 35,40 Gew.-Teile |
| Zucker | 12,50 Gew.-Teile |
| Instantkaffee (Löskaffee) | 12,00 Gew.-Teile |
| Salz | 0,10 Gew.-Teile |

Bei Aufbereitung dieses Instantgetränks mit heißem Wasser macht sich eine angenehme Röstkaffeenote im Geruch, aber auch im Geschmack bemerkbar. Der haptische Eindruck beim Verzehr dieses Getränks ist gleichzusetzen mit kakaohaltigen Getränkepulvern im aufgelösten Zustand. Beim Verzehr macht sich der Röstkaffee infolge der Einbettung in die Matrix nicht als Absatz im Mund- und Rachenbereich bemerkbar.

## Patentansprüche

1. Pulverförmige Zusammensetzung, enthaltend Röstkaffeepulver in fein vermahlener Form, **dadurch gekennzeichnet, daß** das Röstkaffeepulver in eine das Röstkaffeepulver und seine Geschmacks- und Aromastoffe vor Oxidation schützende Matrix eingelagert oder eingebettet ist oder hiervon umgeben ist, wobei das in der Matrix befindliche Röstkaffeepulver in Wasser dispergierbar ist.

2. Pulverförmige Zusammensetzung nach Anspruch 1, **dadurch gekennzeichnet, daß** sie 1 bis 45 Gew.-%, insbesondere 5 bis 25 Gew.-%, vorzugsweise 10 bis 20 Gew.-%, ganz besonderes bevorzugt etwa 15 Gew.-%, Röstkaffeepulver, bezogen auf die pulverförmige Zusammensetzung, enthält und/oder daß der Matrixanteil 99 bis 55 Gew.-%, insbesondere 95 bis 75 Gew.-%, vorzugsweise 90 bis 80 Gew.-%, ganz besonderes bevorzugt etwa 85 Gew.-%, bezogen auf die pulverförmige Zusammensetzung, ausmacht.

3. Pulverförmige Zusammensetzung nach Anspruch 1 oder 2, **dadurch gekennzeichnet, daß** die Matrix solche Bestandteile und Komponenten umfaßt bzw. hiervon gebildet ist, die ausgewählt sind aus der Gruppe von (i) Zuckern, Zukkeralkoholen und Zuckerersatzstoffen; (ii) Fetten, Fettderivaten und anderen fettbasierten Systemen; (iii) Hydrokolloiden, Hydrokolloidderivaten und anderen hydrokolloidbasierten Systemen; (iv) Kakao, insbesondere in Form von Kakaomasse und/oder Kakaopulver; sowie Mischungen der vorgenannten matrixbildenden Bestandteile und Komponenten.

4. Pulverförmige Zusammensetzung nach einem oder mehreren der vorangehenden Ansprüche, **dadurch gekennzeichnet, daß** die Matrix Kakaomasse und/oder Zukker, vorzugsweise Kakaomasse und Zucker, umfaßt.

5. Pulverförmige Zusammensetzung nach einem oder mehreren der vorangehenden Ansprüche, **dadurch gekennzeichnet, daß** die Matrix 35 bis 90 Gew.-%, insbesondere 35 bis 70 Gew.-%, vorzugsweise 40 bis 60 Gew.-%, Kakaomasse enthält, bezogen auf die pulverförmige Zusammensetzung, und/oder daß die Matrix 10 bis 50 Gew.-%, insbesondere 15 bis 45 Gew.-%, vorzugsweise 20 bis 45 Gew.-%, Zucker, insbesondere Rohrzucker, enthält, bezogen auf die pulverförmige Zusammensetzung.

6. Pulverförmige Zusammensetzung nach einem oder mehreren der vorangehenden Ansprüche, **dadurch gekennzeichnet, daß** die Matrix außerdem weitere Inhaltsstoffe enthält, insbesondere ausgewählt aus der Gruppe von Aromen und Aromazusätzen, wie Vanillin; Kakaopulver; Lecithinen; Verarbeitungshilfsmitteln und dergleichen.

7. Pulverförmige Zusammensetzung nach einem oder mehreren der vorangehenden Ansprüche, **dadurch gekennzeichnet, daß** die pulverförmige Zusammensetzung bzw. die Matrix Aromen und/oder Aromazusätze, insbesondere Vanillin, in Mengen von 0,01 bis 5 Gew.-%, insbesondere 0,01 bis 2 Gew.-%, vorzugsweise 0,01 bis 1 Gew.-%, enthält, bezogen auf die pulverförmige Zusammensetzung.

8. Pulverförmige Zusammensetzung nach einem oder mehreren der voranstehenden Ansprüche, **dadurch gekennzeichnet, daß** die pulverförmige Zusammensetzung bzw. die Matrix Kakaopulver, insbesondere in Mengen von 0,5 bis 10 Gew.-%, vorzugsweise 1 bis 5 Gew.-%, enthält.

9. Pulverförmige Zusammensetzung nach einem oder mehreren der vorangehenden Ansprüche, **dadurch gekennzeichnet, daß** die Teilchen der pulverförmigen Zusammensetzung im Mittel eine Teilchengröße von 1 bis 100 µm, vorzugsweise 10 bis 35 µm, bevorzugt etwa 30 µm, aufweisen, insbesondere wobei mindestens 90 % der Teilchen die vorgenannten Teilchengrößen aufweisen.

10. Pulverförmige Zusammensetzung nach einem oder mehreren der vorangehenden Ansprüche, **dadurch gekennzeichnet, daß** die pulverförmige Zusammensetzung eine Schüttdichte von 200 bis 700 g/l, insbesondere 400 bis 600 g/l, vorzugsweise 500 bis 575 g/l, aufweist.

11. Pulverförmige Zusammensetzung nach einem oder mehreren der vorangehenden Ansprüche, **gekennzeichnet durch** die folgende Rezeptur:
| | |
|---|---|
| Kakaomasse | 43,70 Gew.-Teile |
| Zucker | 38,26 Gew.-Teile |
| Röstkaffeepulver (gemahlen) | 15,00 Gew.-Teile |
| Kakaopulver | 3,00 Gew.-Teile |
| Vanillin | 0,04 Gew.-Teile |
wobei alle vorgenannten Gewichtsteilangaben jeweils mit ± 10 % (relativ) variiert werden können.

12. Verfahren zur Herstellung einer pulverförmigen Zusammensetzung nach einem der Ansprüche 1 bis 11, **dadurch gekennzeichnet, daß** man zunächst die einzelnen Bestandteile der pulverförmigen Zusammensetzung nach einem der Ansprüche 1 bis 11 homogenisiert, vorzugsweise durch Mischen im trockenen Zustand, und anschließend die homogenisierten Bestandteile auf die gewünschte Teilchengröße einstellt, insbesondere durch Zerkleinern, wobei hierbei gleichermaßen eine Einlagerung des Röstkaffeepulvers in die Matrix aus Kakaomasse und/oder Zucker sowie gegebenenfalls weiteren Bestandteilen, wie zuvor definiert, erfolgt, gegebenenfalls gefolgt von einem Verfahrensschritt, bei dem die in die gewünschte Teilchengröße gebrachte pulverförmige Zusammensetzung in ein fließfähiges Pulver umgesetzt wird.

13. Verfahren nach Anspruch 12, **dadurch gekennzeichnet, daß** der Verfahrensschritt des Einstellens der Teilchengröße, insbesondere des Zerkleinerns, in mehreren, vorzugsweise mindestens zwei Verfahrensschritten erfolgt und/oder daß das Einstellen der Teilchengröße, insbesondere Zerkleinern, durch Walzen und Feinwalzen der homogenisierten Mischung der einzelnen Bestandteile erfolgt, insbesondere in einem Walzwerk, wobei hierdurch gleichzeitig eine Einlagerung des Röstkaffeepulvers in die Matrix aus Kakaomasse und/oder Zucker sowie gegebenenfalls weiteren Bestandteilen, wie zuvor definiert, erfolgt.

14. Verfahren nach Anspruch 13, **dadurch gekennzeichnet, daß** das Einstellen der Teilchengröße, insbesondere Zerkleinern, in zwei aufeinanderfolgenden Verfahrensschritten erfolgt, insbesondere wobei in einem ersten Zerkleinerungsschritt die Mischung der einzelnen Bestandteile in einem Zwei-Walzwerk vorgewalzt wird und nachfolgend in einem Fünf-Walzwerk auf die gewünschte Teilchenendgröße eingestellt wird.

15. Verfahren nach einem oder mehreren der Ansprüche 12 bis 14, **dadurch gekennzeichnet, daß** die im abschließenden Verfahrensschritt durchgeführte Überführung in ein fließfähiges Pulver mittels eines Pflugscharmischers erfolgt.

16. Verwendung einer pulverförmigen Zusammensetzung, wie in den Ansprüchen 1 bis 11 definiert, in kaffee- und/oder kakaohaltigen Instantgetränken, insbesondere Cappuccino-Getränken.

17. Verwendung nach Anspruch 16, **dadurch gekennzeichnet, daß** die pulverförmige Zusammensetzung nach einem der Ansprüche 1 bis 11 zusammen mit weiteren Bestandteilen eingesetzt wird, insbesondere ausgewählt aus der Gruppe von Creamer, Zuckern, Zuckerersatzstoffen, Süßstoffen, Instantkaffee (Löskaffee), Salz, Aromen und Aromastoffen und dergleichen.

18. Kaffee- und/oder kakaohaltiges Instantgetränk, insbesondere Cappuccino-Getränk, enthaltend eine pulverförmige Zusammensetzung, wie in den Ansprüchen 1 bis 11 definiert.

19. Instantgetränk nach Anspruch 18, enthaltend die pulverförmige Zusammensetzung der Ansprüche 1 bis 11 in Mengen von 5 bis 60 Gew.-%, insbesondere 10 bis 50 Gew.-%, vorzugsweise 30 bis 45 Gew.-%, besonders bevorzugt etwa 40 Gew.-%, bezogen auf das Instantgetränk.

20. Instantgetränk nach Anspruch 18 oder 19, enthaltend außerdem weitere Bestandteile oder Inhaltsstoffe, insbesondere ausgewählt aus der Gruppe von Creamer, Zuckern, Zuckerersatzstoffen, Süßstoffen, Instantkaffee (Löskaffee), Salz, Aromen und Aromastoffen und dergleichen.

21. Instantgetränk nach einem der Ansprüche 18 bis 20, **gekennzeichnet durch** die folgende Rezeptur:
| | |
|---|---|
| Pulverförmige Zusammensetzung nach den Ansprüchen 1 bis 11 | 40,00 Gew.-Teile |
| Creamer | 35,40 Gew.-Teile |
| Zucker | 12,50 Gew.-Teile |
| Instantkaffee (Löskaffee) | 12,00 Gew.-Teile |
| Salz | 0,10 Gew.-Teile |
wobei alle vorgenannten Gewichtsteilangaben jeweils mit ± 10 % (relativ) variiert werden können.

## Claims

1. Pulverulent composition containing roast coffee powder in finely ground form, **characterized in that** the roast coffee powder is incorporated or embedded into a matrix protecting the roast coffee powder and its flavour and aroma substances from oxidation, or is enclosed thereby, the roast coffee powder situated in the matrix being dispersible in water.

2. Pulverulent composition according to Claim 1, **characterized in that** it contains 1 to 45 % by weight, in particular 5 to 25 % by weight, preferably 10 to 20 % by weight, very particularly preferably about 15 % by weight, of roast coffee powder, based on the pulverulent composition, and/or **in that** the matrix fraction makes up 99 to 55 % by weight, in particular 95 to 75 % by weight, preferably 90 to 80 % by weight, very particularly preferably about 85 % by weight, based on the pulverulent composition.

3. Pulverulent composition according to Claim 1 or 2, **characterized in that** the matrix comprises those constituents and components, or is formed thereof, which are selected from the group of (i) sugars, sugar alcohols and sugar replacers; (ii) fats, fat derivatives and other fat-based systems; (iii) hydrocolloids, hydrocolloid derivatives and other hydrocolloid-based systems; (iv) cocoa, in particular in the form of cocoa mass and/or cocoa powder; and also mixtures of the abovementioned matrix-forming constituents and components.

4. Pulverulent composition according to one or more of the preceding claims, **characterized in that** the matrix comprises cocoa mass and/or sugar, preferably cocoa mass and sugar.

5. Pulverulent composition according to one or more of the preceding claims, **characterized in that** the matrix contains 35 to 90 % by weight, in particular 35 to 70 % by weight, preferably 40 to 60 % by weight, of cocoa mass, based on the pulverulent composition, and/or **in that** the matrix contains 10 to 50 % by weight, in particular 15 to 45 % by weight, preferably 20 to 45 % by weight, sugar, in particular cane sugar, based on the pulverulent composition.

6. Pulverulent composition according to one or more of the preceding claims, **characterized in that** the matrix in addition contains further constituents, in particular selected from the group of aromas and aroma additives such as vanillin; cocoa powder; lecithins; processing aids and the like.

7. Pulverulent composition according to one or more of the preceding claims, **characterized in that** the pulverulent composition for the matrix contains aromas and/or aroma additives, in particular vanillin, in amounts of 0.01 to 5 % by weight, in particular 0.01 to 2 % by weight, preferably 0.01 to 1 % by weight, based on the pulverulent composition.

8. Pulverulent composition according to one or more of the preceding claims, **characterized in that** the pulverulent composition or the matrix contains cocoa powder, in particular in amounts of 0.5 to 10 % by weight, preferably 1 to 5 % by weight.

9. Pulverulent composition according to one or more of the preceding claims, **characterized in that** the particles of the pulverulent composition have on average a particle size of 1 to 100 µm, preferably 10 to 35 µm, preferably about 30 µm, in particular at least 90 % of the particles having the abovementioned particle sizes.

10. Pulverulent composition according to one or more of the preceding claims, **characterized in that** the pulverulent composition has a bulk density of 200 to 700 g/l, in particular 400 to 600 g/l, preferably 500 to 575 g/l.

11. Pulverulent composition according to one or more of the preceding claims, **characterized by** the following formula:
| | |
|---|---|
| Cocoa mass | 43.70 parts by weight |
| Sugar | 38.26 parts by weight |
| Roast coffee powder (ground) | 15.00 parts by weight |
| Cocoa powder | 3.00 parts by weight |
| Vanillin | 0.04 parts by weight |
all abovementioned weight data being able to be varied in each case by ± 10% (relative).

12. Process for producing a pulverulent composition according to one of Claims 1 to 11, **characterized in that** first the individual constituents of the pulverulent composition according to one of Claims 1 to 11 are homogenized, preferably by mixing in the dry state, and subsequently the homogenized constituents are set to the desired particle size, in particular by comminution, in this case, equally, incorporation of the roast coffee powder into the matrix of cocoa mass and/or sugar and also if appropriate other constituents, as defined above, being performed, if appropriate followed by a process step in which the pulverulent composition brought into the desired particle size is converted into a free-flowing powder.

13. Process according to Claim 12, **characterized in that** the process step of setting the particle size, in particular comminution, is performed in a plurality, preferably at least two, process steps and/or **in that** the setting of the particle size, in particular comminution, is performed by rolling and fine rolling of the individual constituents of the homogenized mixture, in particular in a roller mill, as a result simultaneously incorporation of the roast coffee powder into the matrix of cocoa mass and/or sugar and also if appropriate other constituents as defined above being performed.

14. Process according to Claim 13, **characterized in that** the setting of the particle size, in particular comminution, is performed in two sequential process steps, in particular, in a first comminution step, the mixture of the individual constituents being pre-rolled in a two-roller mill and subsequently being set to the desired particle size in a five-roll mill.

15. Process according to one or more of Claims 12 to 14, **characterized in that** the conversion into a free-flowing powder carried out in the final process step is performed by means of a ploughshare mixer.

16. Use of a pulverulent composition as defined in Claims 1 to 11 in coffee- and/or cocoa-containing instant drinks, in particular cappuccino drinks.

17. Use according to Claim 16, **characterized in that** the pulverulent composition according to one of Claims 1 to 11 is used together with further constituents, in particular selected from the group of creamers, sugars, sugar replacers, sweeteners, instant coffee (soluble coffee), salt, aromas and aroma substances and the like.

18. Coffee- and/or cocoa-containing instant drink, in particular a cappuccino drink, containing a pulverulent composition as defined in Claims 1 to 11.

19. Instant drink according to Claim 18 containing the pulverulent composition of Claims 1 to 11 in amounts of 5 to 60 % by weight, in particular 10 to 50 % by weight, preferably 30 to 45 % by weight, particularly preferably about 40 % by weight, based on the instant drink.

20. Instant drink according to Claim 18 or 19, containing, in addition, further constituents or ingredients, in particular selected from the group of creamers, sugars, sugar replacers, sweeteners, instant coffee (soluble coffee), salt, aromas and aroma substances and the like.

21. Instant drink according to one of Claims 18 to 20, **characterized by** the following formula:
| | |
|---|---|
| Pulverulent composition according to Claims 1 to 11 | 40.00 parts by weight |
| Creamer | 35.40 parts by weight |
| Sugar | 12.50 parts by weight |
| Instant coffee (soluble coffee) | 12.00 parts by weight |
| Salt | 0.10 parts by weight |
all abovementioned weight data being able to be varied in each case by ± 10% (relative).

## Revendications

1. Composition pulvérulente contenant de la poudre de café torréfié sous forme finement moulue, **caractérisée en ce que** la poudre de café torréfié est incorporée ou incluse dans une matrice protégeant contre l'oxydation la poudre de café torréfié et ses arômes et agents de sapidité ou est entourée par celle-ci, la poudre de café torréfié présente dans la matrice étant dispersable dans l'eau.

2. Composition pulvérulente selon la revendication 1, **caractérisée en ce qu'**elle contient de 1 à 45 % en poids, en particulier de 5 à 25 % en poids, de préférence de 10 à 20 % en poids, de façon tout particulièrement préférée environ 15 % en poids de poudre de café torréfié, par rapport à la composition pulvérulente, et/ou **en ce que** la proportion de la matrice représente de 99 à 55 % en poids, en particulier de 95 à 75 % en poids, de préférence de 90 à 80 % en poids, de façon tout particulièrement préférée environ 85 % en poids, par rapport à la composition pulvérulente.

3. Composition pulvérulente selon la revendication 1 ou 2, **caractérisée en ce que** la matrice comprend ou consiste en des ingrédients et des composants qui sont choisis dans le groupe formé par (i) des sucres, des alcools dérivés de sucres et des succédanés de sucre, (ii) des graisses, des dérivés de graisses et d'autres systèmes à base de graisses, (iii) des hydrocolloïdes, des dérivés d'hydrocolloïdes et d'autres systèmes à base de graisses; (iv) du cacao, en particulier sous forme de masse de cacao et/ou de poudre de cacao; ainsi que des mélanges des ingrédients et composants précités formant la matrice.

4. Composition pulvérulente selon une ou plusieurs des revendications précédentes, **caractérisée en ce que** la matrice comprend de la masse de cacao et/ou de poudre de cacao, de préférence de la masse de cacao et du sucre.

5. Composition pulvérulente selon une ou plusieurs des revendications précédentes, **caractérisée en ce que** la matrice comprend de 35 à 90 % en poids, en particulier de 35 à 70 % en poids, de préférence de 40 à 60 % en poids, de masse de cacao, par rapport à la composition pulvérulente, et/ou **en ce que** la matrice contient de 10 à 50 % en poids, en particulier de 15 à 45 % en poids, de préférence de 20 à 45 % en poids de sucre, en particulier de sucre de canne, par rapport à la composition pulvérulente.

6. Composition pulvérulente selon une ou plusieurs des revendications précédentes, **caractérisée en ce que** la matrice contient en outre d'autres ingrédients, en particulier choisis dans le groupe des arômes et des additifs aromatiques, tels que la vanilline; la poudre de cacao; les lécithines; des adjuvants de fabrication et similaires.

7. Composition pulvérulente selon une ou plusieurs des revendications précédentes, **caractérisée en ce que** la composition pulvérulente ou la matrice contient des arômes et/ou des additifs aromatiques, en particulier de la vaniline, en quantités de 0,01 à 5 % en poids, en particulier de 0,01 à 2 % en poids, de préférence de 0,01 à 1 % en poids, par rapport à la composition pulvérulente.

8. Composition pulvérulente selon une ou plusieurs des revendications précédentes, **caractérisée en ce que** la composition pulvérulente ou la matrice contient de la poudre de cacao, en particulier en quantités de 0,5 à 10 % en poids, de préférence de 1 à 5 % en poids.

9. Composition pulvérulente selon une ou plusieurs des revendications précédentes, **caractérisée en ce que** les particules de la composition pulvérulente ont en moyenne une taille de particule de 1 à 100 µm, de préférence de 10 à 35 µm, de préférence d'environ 30 µm, en particulier au moins 90 % des particules ayant les tailles de particule précitées.

10. Composition pulvérulente selon une ou plusieurs des revendications précédentes, **caractérisée en ce que** la composition pulvérulente présente une densité apparente de 200 à 700 g/l, en particulier de 400 à 600 g/l, de préférence de 500 à 575 g/l.

11. Composition pulvérulente selon une ou plusieurs des revendications précédentes, **caractérisée par** la formule suivante :
| | |
|---|---|
| masse de cacao | 43,70 parties en poids |
| sucre | 38,26 parties en poids |
| poudre de café torréfié (moulue) | 15,00 parties en poids |
| poudre de cacao | 3,00 parties en poids |
| vanilline | 0,04 partie en poids |
les données en parties en poids précitées étant toutes susceptibles chacune de variation de ± 10 % (relatifs).

12. Procédé pour la préparation d'une composition pulvérulente selon l'une quelconque des revendications 1 à 11, **caractérisé en ce que** d'abord on homogénéise les composants individuels de la composition pulvérulente selon l'une quelconque des revendications 1 à 11, de préférence par mélange à l'état sec, et ensuite on ajuste les composants homogénéisés à la taille de particule désirée, en particulier par broyage, en effectuant en même temps également une incorporation de la poudre de café torréfié dans la matrice à base de masse de cacao et/ou de sucre ainsi qu'éventuellement d'autres composants, tels que définis précédemment, éventuellement suivie d'une étape de processus dans laquelle la composition pulvérulente mise à la taille de particule désirée est convertie en une poudre apte à l'écoulement.

13. Procédé selon la revendication 12, **caractérisé en ce que** l'étape de processus de l'ajustement de la taille de particule, en particulier du broyage, s'effectue en plusieurs, de préférence au moins deux étapes de processus et/ou en ce que l'ajustement de la taille de particule, en particulier le broyage, s'effectue par laminage et laminage fin du mélange homogénéisé des composants individuels, en particulier dans un broyeur à cylindres, une incorporation de la poudre de café torréfié dans la matrice à base de masse de cacao et/ou de sucre ainsi qu'éventuellement d'autres composants, tels que définis précédemment, s'effectuant en même temps dans ce broyeur.

14. Procédé selon la revendication 13, **caractérisé en ce que** l'ajustement de la taille de particule, en particulier le broyage, s'effectue dans deux étapes de processus successives, en particulier, dans une première étape de broyage le mélange des composants individuels étant prélaminé dans un broyeur à deux cylindres et ensuite ajusté à la taille finale de particule désirée dans un broyeur à cinq cylindres.

15. Procédé selon une ou plusieurs des revendications 12 à 14, **caractérisé en ce que** la conversion en une poudre apte à l'écoulement, effectuée dans l'étape finale du processus, s'effectue au moyen d'un mélangeur à soc de charrue.

16. Utilisation d'une composition pulvérulente telle que définie dans les revendications 1 à 11, dans des boissons instantanées contenant du café et/ou du cacao, en particulier des boissons de type cappuccino.

17. Utilisation selon la revendication 16, **caractérisée en ce que** la composition pulvérulente selon l'une quelconque des revendications 1 à 11 est utilisée avec d'autres ingrédients, en particulier choisis dans le groupe consistant en blanchissants, sucres, succédanés de sucre, édulcorants, café instantané (café soluble), sel, arômes et substances aromatiques et similaires.

18. Boisson instantanée contenant du café et du cacao, en particulier boisson de type cappuccino, contenant une composition pulvérulente telle que définie dans les revendications 1 à 11.

19. Boisson instantanée selon la revendication 18, contenant la composition pulvérulente des revendications 1 à 11 en quantités de 5 à 60 % en poids, en particulier de 10 à 50 % en poids, de préférence de 30 à 45 % en poids, de façon particulièrement préférée d'environ 40 % en poids, par rapport à la boisson instantanée.

20. Boisson instantanée selon la revendication 18 ou 19, contenant en outre d'autres ingrédients ou composants, en particulier choisis dans le groupe consistant en blanchissants, sucres, succédanés de sucre, édulcorants, café instantané (café soluble), sel, arômes et substances aromatiques et similaires.

21. Boisson instantanée selon l'une quelconque des revendications 18 à 20, **caractérisée par** la formule suivante :
| | |
|---|---|
| Composition pulvérulente selon les revendications 1 à 11 | 40,00 parties en poids |
| blanchissant | 35,40 parties en poids |
| sucre | 12,50 parties en poids |
| café instantané (café soluble) | 12,00 parties en poids |
| sel | 0,10 partie en poids |
les données en parties en poids précitées étant toutes susceptibles chacune de variation de ± 10 % (relatifs).
